# EUROPEAN PATENT APPLICATION

(11) **EP 4 163 463 A1**
(43) Date of publication of application: **12.04.2023**
(21) Application number: 21863364.2
(22) Date of filing: 02.07.2021
(51) Int. Cl.: E05C 17/12, E05F 15/76, E05F 15/63, E05F 3/22, E05F 15/60, F03D 80/00

(54) **COVER PLATE ASSEMBLY, WIND POWER TOWER TUBE, AND WIND TURBINE**

(30) Priority: 01.09.2020 CN 202021868682 U; 07.09.2020 CN 202021923278 U
(71) Applicant: Ficont Industry (Beijing) Co., Ltd., Beijing 101106 (CN)
(72) Inventor: YU, Tiehui, Beijing 101106 (CN); ZHANG, Jinbo, Beijing 101106 (CN)
(74) Representative: Geskes, Christoph
(86) International application number: PCT/CN2021/104150
(87) International publication number: WO 2022/048296

(57) **Abstract**

A cover plate assembly, a wind power tower tube, and a wind turbine. The cover plate assembly comprises: a drive component, comprising a swing rod (6) provided with a first limiting component (3); and a cover plate (8), suitable for rotating between a first position and a second position along with rotation of the swing rod (6), the cover plate (8) being provided with a guide component (4), and the guide component (4) moving along the swing rod (6) in a swinging process of the swing rod (6). At the second position, the guide component (4) is in limiting fit with the first limiting component (3), so as to limit the swing rod (6) to drive the cover plate (8) to move back towards the first position; and when the cover plate (8) rotates towards the second position, matching between the first limiting component (3) and the guide component (4) can prevent the cover plate (8) from continuing rotating.

## Description

### CROSS-REFERENCE TO RELATED APPLICATIONS

The present application claims priority to Chinese Application No. 202021923278.3 filed on September 7, 2020, entitled "Automatic Platform Cover Plate Device of Fan Tower Drum", and Chinese Application No. 202021868682.5 filed on September 1, 2020, entitled "Mechanical and Electrical Limiting Structure of Automatic Flip Plate Device", which are hereby incorporated by reference in their entireties.

### TECHNICAL FIELD

The present application relates to the technical field of wind power, and in particular to a cover plate assembly, a wind power tower drum and a wind turbine.

### BACKGROUND

A platform cover plate corresponding to each tower drum platform of the wind power tower drum, as a protective cover plate of each tower drum platform, is an indispensable component in a wind turbine. The platform cover plate on each tower drum platform can play a protective role when maintenance personnel go up and down the tower drum. The opening and closing of the existing platform cover plate of the tower drum platform of the wind turbine generally requires manual operation, which is very inconvenient especially in the process of aerial operation.

### SUMMARY

The present application aims to solve at least one of the problems existing in the related art. The present application provides a cover plate assembly, which drives the cover plate to automatically rotate through swinging of a swing lever of a driving component, thereby reducing the labor intensity of operators.

The present application further provides a wind power tower drum.

The present application further provides a wind turbine.

In a first aspect, a cover plate assembly according to an embodiment of the present application includes:
a driving component, including a swing lever provided with a first limiting component; and
a cover plate, configured for rotating between a first position and a second position as the rotation of the swing lever, where the cover plate is provided with a guiding component, and the guiding component moves along the swing lever during a swing process of the swing lever; when at the second position, the guiding component and the first limiting component form a limiting matching, to prevent the swing lever from driving the cover plate to move far away from the first position.

According to the cover plate assembly of embodiments of the present application, the cover plate is driven to rotate automatically by the swing lever, which can reduce the labor intensity of operators. When the cover plate is at the second position, a limiting matching is formed between the guiding component and the first limiting component. Therefore, when the cover plate is rotated from the first position to the second position, once the cover plate reaches the second position, the matching between the first limiting component and the guiding component can prevent the cover plate from continuing rotating.

According to an embodiment of the present application, the limiting matching formed between the guiding component and the first limiting component is constructed as: when at the second position, the swing lever is configured for driving the cover plate to move toward the first position.

According to an embodiment of the present application, the first limiting component includes:
a first stop, fixed to the swing lever, and located in a moving direction of the guiding component; and
a second stop, connected to the first stop, and provided opposite to the swing lever,
when at the second position, the guiding component abuts the first stop or the second stop, and the guiding component is located in a limiting groove formed between the first stop, the second stop and the swing lever.

According to an embodiment of the present application, the first stop is a first limiting plate, and the second stop is a second limiting plate, where the first limiting component includes a mounting plate, the first limiting plate and the second limiting plate which are connected in sequence, and the mounting plate and the second limiting plate are respectively located on both sides of the first limiting plate.

According to an embodiment of the present application, when at the first position, an included angle between the cover plate and a horizontal plane is less than 90°, when at the second position, an included angle between the cover plate and the horizontal plane is greater than 90°, and the guiding component is located in the limiting groove when the included angle between the cover plate and the horizontal plane is greater than 90°.

According to an embodiment of the present application, the guiding component includes:
a roller, provided with a guiding groove; and
a mounting component, configured for mounting the roller to the cover plate;
where the swing lever includes a guiding surface matched with the guiding groove.

According to an embodiment of the present application, the roller is mounted to an edge of the cover plate and in with a width direction of the cover plate, the roller protrudes relative to an end surface of the cover plate.

According to an embodiment of the present application, the driving component further includes:
a motor, where an output shaft of the motor is dynamically coupled to the swing lever; and
a controller, configured to control start and stop of the motor based on the position of the cover plate.

According to an embodiment of the present application, the motor is provided with a second limiting component; when at the first position, a limiting matching is formed between the second limiting component and the swing lever to prevent the swing lever from rotating far away from the second position.

In a second aspect, a wind power tower drum according to an embodiment of the present application includes at least one tower drum platform provided with a platform entrance, where the tower drum platform is provided with the cover plate assembly according to the embodiments of the first aspect, and the cover plate is capable of opening and closing the platform entrance.

Since the wind power tower drum according to the embodiments of the present application includes a cover plate assembly, it has all the effects of the cover plate assembly, which will not be repeated here.

According to an embodiment of the present application, a climbing ladder is provided in the wind power tower drum, the climbing ladder passes through the platform entrance, and the climbing ladder is provided with a sensing device for sensing a body of a climb-free apparatus, the sensing device is communicatively connected to a controller of the wind power tower drum, and the controller is configured to control the rotation of the cover plate based on a sensing signal of the sensing device.

In a third aspect, a wind turbine according to an embodiment of the present application includes:
a wind power tower drum according to the embodiments of the second aspect;
a wind wheel, mounted to the wind power tower drum; and
a generator, mounted to the wind power tower drum.

Since the wind turbine according to the embodiment of the present application includes a wind power tower, it has all the effects of the wind power tower drum, which will not be repeated here.

In a fourth aspect, a wind power tower drum according to an embodiment of the present application includes a motor, a controller, a first limiting component, a guiding component, a swing lever, a second limiting component and a cover plate. Where the controller is provided in a control box, the control box is fixed to a top of the motor, and the controller is configured to control automatic opening and closing of the cover plate based on a sensor; the motor is fixed on a tower drum platform of the wind power tower drum, and the motor is configured for driving the swing lever to swing; the swing lever is mounted to the motor, and the swing lever is configured for driving the cover plate to rotate between a first position and a second position to open and close automatically;
when at the second position, the guiding component and the first limiting component form a limiting matching, and the limiting matching formed between the guiding component and the first limiting component is constructed as: the swing lever is prevent from driving the cover plate to move far away from the first position, and the swing lever is configured for driving the cover plate to move toward the first position;
when at the first position, a limiting matching is formed between the second limiting component and the swing lever, to prevent the swing lever from rotating far away from the second position.

The effect of the wind power tower drum according to the embodiments of the present application is similar to the effect of the wind power tower drum according to the embodiments of the second aspect, and will not be repeated here.

According to an embodiment of the present application, the control box is fixed to the top of the motor by a screw, the motor is fixed on the tower drum platform of the wind power tower drum by a screw, and the swing lever is mounted to the motor by a screw;
the guiding component includes a roller and a mounting component, the roller is provided with a guiding groove, the swing lever includes a guiding surface matched with the guiding groove, and the mounting component is configured for mounting the roller to the cover plate;
the first limiting component includes a mounting plate, a first limiting plate and a second limiting plate which are connected in sequence, and the mounting plate and the second limiting plate are respectively located on both sides of the first limiting plate, the mounting plate is fixed to the swing lever by a screw, the first limiting plate is located in a moving direction of the roller, the second limiting plate is provided relative to the swing lever, a limiting groove is formed between the first limiting plate, the second limiting plate and the swing lever;
when at the second position, the roller abuts the first limiting plate or the second limiting plate, and the roller is located in the limiting groove;
the second limiting component is a limiting block, and the limiting block is provided on the motor; the wind power tower drum further includes a sensing device, the sensing device is fixed on a climbing ladder of the wind power tower drum by a screw, and the sensing device is configured to sense a position of a body of a climb-free apparatus and send the position to the controller.

Additional aspects and advantages of the present application will be set forth, in part, from the following description, and in part will become apparent from the following description, or may be learned by practice of the present application.

### BRIEF DESCRIPTION OF THE DRAWINGS

In order to more clearly illustrate the solutions according to the embodiments of the present application or the related art, the accompanying drawings needed in the description of the embodiments or the related art will be briefly introduced as follows. It should be noted that the drawings in the following description are part of embodiments of the present application. For those of ordinary skill in the art, other drawings can also be obtained based on these drawings without any creative effort.
Fig. 1 is a schematic diagram of mounting a cover plate assembly on a tower drum platform of a wind power tower drum provided by an embodiment of the present application, a cover plate being in a first position;
Fig. 2 is a schematic view of mounting a cover plate assembly on a tower drum platform of a wind power tower drum provided by an embodiment of the present application, a cover plate being in a second position;
Fig. 3 is a schematic structural diagram of a cover plate assembly provided by an embodiment of the present application;
Fig. 4 is a schematic structural diagram of a first limiting component (Z-shaped metal module) of a swing lever and a guiding component (roller) forming a limiting matching provided by an embodiment of the present application;
Fig. 5 is another schematic structural diagram of a first limiting component (Z-shaped metal module) of a swing lever and a guiding component (roller) forming a limiting matching provided by an embodiment of the present application;
Fig. 6 is a schematic diagram showing positional relationship between a swing lever and a second limiting component provided by an embodiment of the present application; and
Fig. 7 is a schematic state diagram of a wind power tower drum when a cover plate assembly is manually opened provided by an embodiment of the present application.

### Reference number:

1: motor; 2: controller; 3: first limiting component; 301: first stop; 302: second stop; 303: mounting part; 4: guiding component; 401: guiding groove; 5: mounting component; 6: swing lever; 601: guiding surface; 7: second limiting component; 8: cover plate; 9: tower drum platform; 10: sensing device; 11: lower electrical limiting component; 12: upper electrical limiting component.

### DETAILED DESCRIPTION

The implementations of the present application are further described in detail below in conjunction with the accompanying drawings and embodiments. The following embodiments are intended to illustrate the present application, but are not intended to limit the scope of the present application.

In the description of the embodiments of the present application, it should be noted that, the orientation or positional relations indicated by terms such as "center", "longitudinal", "transverse", "upper", "lower", "front", "rear", "left", "right", "vertical", "horizontal", "top", "bottom", "inner", "outer" and the like are based on the orientation or positional relations shown in the drawings, which are merely convenience of description of the embodiments of the present application and to simplify description, but does not indicate or imply that the device or element referred to must have the particular orientation, or be constructed and operated in a particular orientation, and thus they are not to be construed as limiting the embodiments of the present application. Furthermore, the terms "first", "second" and "third" are used for descriptive purposes only and should not be construed as indicating or implying a relative importance.

In the description of the embodiments of the present application, it should be noted that unless explicitly stated and defined otherwise, the terms "connected to" and "connected" shall be understood broadly, for example, it may be either fixedly connected or detachably connected, or can be integrated; it may be either mechanically connected, or electrically connected; it may be either directly connected or indirectly connected through an intermediate medium. The specific meanings of the terms above in the embodiments of the present application can be understood by a person skilled in the art in accordance with specific conditions.

In the embodiments of the present application, unless explicitly stated and defined otherwise, a first feature being "above" or "below" a second feature may mean that the first feature is directly contacted with the second feature, or the first feature and the second feature are indirectly contacted through an intermediate medium. Also, a first feature being "above", "over" and "on" a second feature may mean that the first feature is directly above or obliquely above the second feature, or simply means that a level of the first feature is higher than that of the second feature. A first feature being "below", "under" and "beneath" a second feature may mean that the first feature is directly below or obliquely below the second feature, or simply means that a level of the first feature is lower than that of the second feature.

In the description of this specification, the reference terms such as "an embodiment", "some embodiments", "example", "specific example", or "some examples", and the like mean that specific feature, structure, material or characteristic described in conjunction with the embodiment or example is included in at least one embodiment or example of the present application. In this description, schematic expressions of the above terms are not necessarily directed to the same embodiment or example. Furthermore, the described specific feature, structure, material or characteristic can be combined in any suitable manner in any one or more embodiments or examples. In addition, those skilled in the art can combine various embodiments or examples and features in various embodiments or examples described in this description unless they are contradictory.

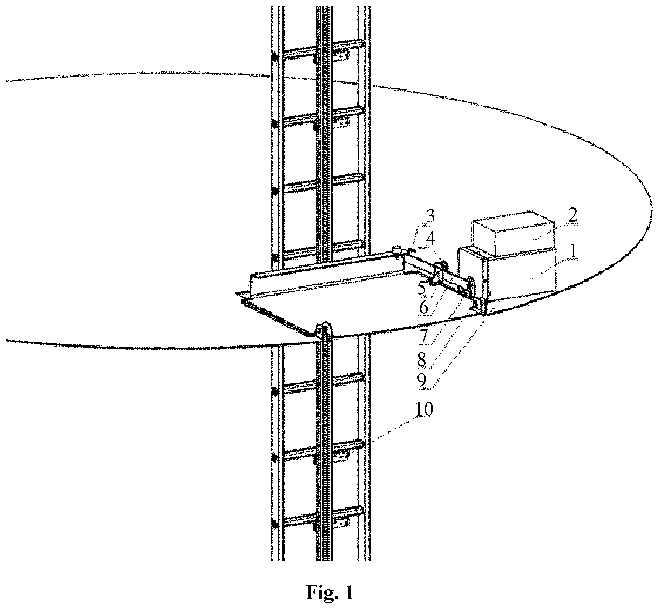

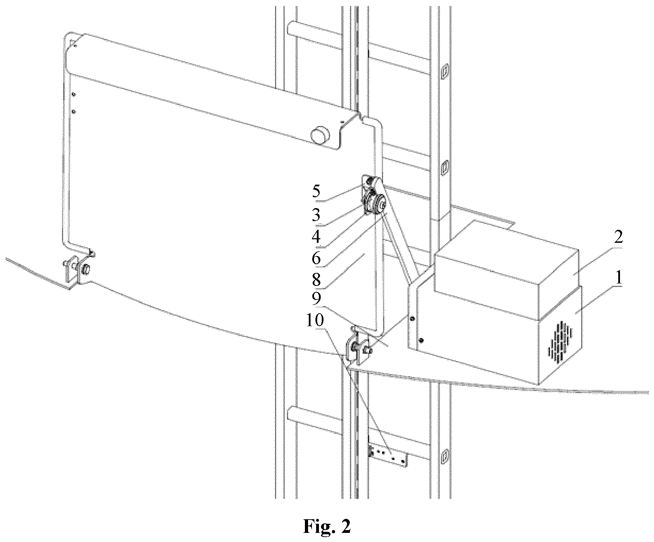

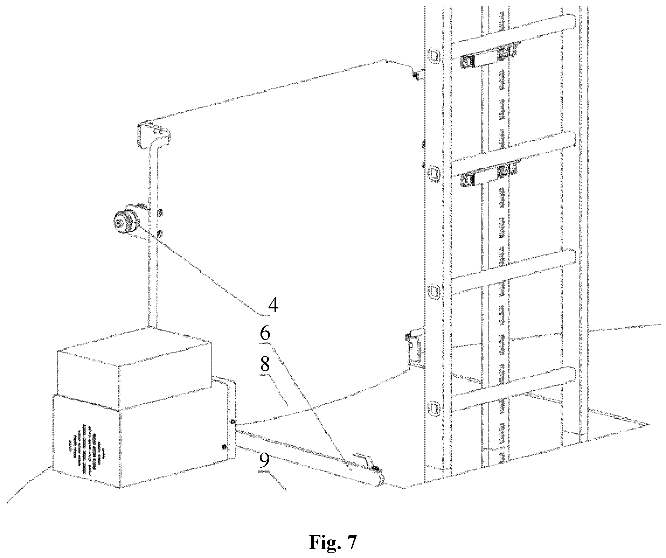

Referring to Fig. 1 to Fig. 7, in a first aspect, a cover plate assembly according to an embodiment of the present application is provided. In an embodiment of the present application, the structure and working principle of the cover plate assembly are described by taking the cover plate assembly applied to a wind power tower drum as an example. Without loss of generality, the cover assembly can further be used in other applications.

According to an embodiment of the present application, the cover plate assembly includes a driving component and a cover plate 8. The driving component includes a swing lever 6 provided with a first limiting component 3; the cover plate 8 is configured for rotating between a first position and a second position as rotation of the swing lever 6. For the cover plate assembly applied to the wind power tower drum, the first position of the cover plate 8 corresponds to a closed state of the cover plate 8, and the cover plate 8 can close the platform entrance on the wind power tower drum at this time; the second position of the cover plate 8 corresponds to an open state, and the cover plate 8 can open the platform entrance on the wind power tower drum at this time. When the cover plate assembly is applied to other situations, the first position and the second position can also correspond to other states of the cover plate 8 respectively depending on the situations to which the cover plate assembly is applied, as long as the swing lever 6 can drive the cover plate 8 to switch between different states. In different situations, the angle by which the swing lever 6 drives the cover plate 8 to rotate may be different.

According to an embodiment of the present application, the cover plate 8 is provided with a guiding component 4, and the guiding component 4 moves along the swing lever 6 during a swing process of the swing lever 6. The guiding component 4 and the first limiting component 3 form a limiting matching when the cover plate 8 is rotated to the second position. The limiting matching includes at least one of the following two limiting functions: first, preventing the swing lever 6 from driving the cover plate 8 to move far away from the first position; second, allowing the swing lever 6 to drive the cover plate 8 to move toward the first position. Specifically, assuming that the process of rotating the cover plate 8 from the first position to the second position is a forward rotation process of the cover plate 8, and the process of rotating the cover plate 8 from the second position to the first position is a reverse rotation process: when the cover plate 8 is rotated forwardly from the first position to the second position, once the cover plate 8 reaches the second position, the matching between the first limiting component 3 and the guiding component 4 can prevent the cover plate 8 from continuing forward rotating; when the cover plate 8 is rotated reversely from the second position to the first position, before the guiding component 4 is separated from the first limiting component 3, the swing lever 6 will drive the cover plate 8 to rotate toward the first position.

According to a wind turbine provided by an embodiment of the present application, the cover plate 8 is driven to rotate automatically by the swing lever 6, which can reduce the labor intensity of operators. When the cover plate 8 is at the second position, a limiting matching is formed between the guiding component 4 and the first limiting component 3. Therefore, when the cover plate 8 is rotated from the first position to the second position, once the cover plate 8 reaches the second position, the matching between the first limiting component 3 and the guiding component 4 can prevent the cover plate 8 from continuing rotating.

When the limiting matching further has the above-mentioned second function, when the cover plate 8 rotates from the second position to the first position, before the guiding component 4 is separated from the first limiting component 3, the swing lever 6 will drive the cover plate 8 to rotate toward the first position. Even if the limiting matching does not have the above-mentioned second function, the cover plate 8 may also rotate with the swing lever 6 toward the first position under the action of its own gravity.

According to an embodiment of the present application, when the first limiting component 3 can implement at least the two above-mentioned limiting functions, the first limiting component 3 includes a first stop 301 and a second stop 302. The first stop 301 is fixed to the swing lever 6 and is located in a moving direction of the guiding component 4 (the moving direction of the guiding component 4 here refers to a moving direction of the guiding component 4 relative to the swing lever 6); the second stop 302 is connected to the first stop 301 and is provided opposite to the swing lever 6. Here, the second stop 302 being provided opposite to the swing lever 6 refers to a situation where a limiting groove can be formed between the first stop 301, the second stop 302 and the swing lever 6. Where the second stop 302 may be parallel to the length direction of the swing lever 6, and the second stop 302 may also form a certain angle with the length direction of the swing lever 6. When the cover plate 8 moves to the second position, the guiding component 4 abuts against the first stop 301 or the second stop 302, and the guiding component 4 is located in a limiting groove formed between the first stop 301, the second stop 302 and the swing lever 6. When the cover plate 8 moves forwardly to the second position, the guiding component 4 abuts against the first stop 301 to prevent the cover plate 8 from continuing moving forwardly; when the cover plate 8 rotates reversely from the second position to the first stop, the guiding component 4 abuts against the second stop 302, so that the swing lever 6 can drive the cover plate 8 to rotate. In addition, the first limiting component 3 further includes a mounting part 303. The mounting part 303, the first stop 301 and the second stop 302 are connected in sequence, and the mounting part 303 and the second stop 302 are respectively located on both sides of the first stop 301.

According to an embodiment of the present application, the first stop 301 is a first limiting plate, the second stop 302 is a second limiting plate, and the mounting part 303 is a mounting plate. That is, the first limiting component 3 includes a mounting plate, a first limiting plate and a second limiting plate which are connected in sequence, and the mounting plate and the second limiting plate are respectively located on both sides of the first limiting plate. The first limiting component 3 is substantially Z-shaped. Both the first stop 301 and the second stop 302 may adopt other limiting structure forms in addition to the limiting "plate". Besides, in order to realize the fixation of the first stop 301 and the second stop 302, it is not necessary to mount them to the swing lever 6 in the form of the mounting part 303. When the first limiting component 3 is substantially Z-shaped, the mounting part 303 can be detachably fixed to the swing lever 6 by a screw, or can be fixed to the swing lever 6 by welding, clamping, gluing and the like.

According to an embodiment of the present application, when at the first position, an included angle between the cover plate 8 and a horizontal plane is less than 90°, for example, the included angle between the cover plate 8 and the horizontal plane when the cover plate 8 is at the first position can be exactly 0°. At this time, the cover plate 8 will be at the first position (that is, the open state) under the action of gravity, and the swing lever 6 is located below the cover plate 8, then the swing lever 6 rotates upward to drive the cover plate 8 to open. When at the second position, the included angle between the cover plate 8 and the horizontal plane is greater than 90°. At this time, in order to maintain the cover plate 8 at the second position, it is necessary to form a limiting matching between the first limiting component 3 of the swing lever 6 and the guiding component 4. The guiding component 4 is located in the limiting groove when the included angle between the cover plate 8 and the horizontal plane is greater than 90°, and then no matter in the opening process or the closing process, once the included angle between the cover plate 8 and the horizontal plane exceeds 90°, a limiting matching is formed between the guiding component 4 of the cover plate 8 and the first limiting component 3 of the swing lever 6. Specifically, when the cover plate 8 is opened, once the included angle between the cover plate 8 and the horizontal plane exceeds 90°, the matching of the guiding component 4 and the first limiting component 3 can prevent the cover plate 8 from moving toward another side and falling to the tower drum platform 8 under the action of gravity. In the process of closing the cover plate 8, once the angle between the cover plate 8 and the horizontal plane exceeds 90°, the matching of the guiding component 4 and the first limiting component 3 can ensure that the rotation of the swing lever 6 can drive the cover 8 to close.

According to an embodiment of the present application, when the included angle between the cover plate and the horizontal plane is just 90°, the guiding component 4 starts to enter or starts to separate from the first limiting component 3.

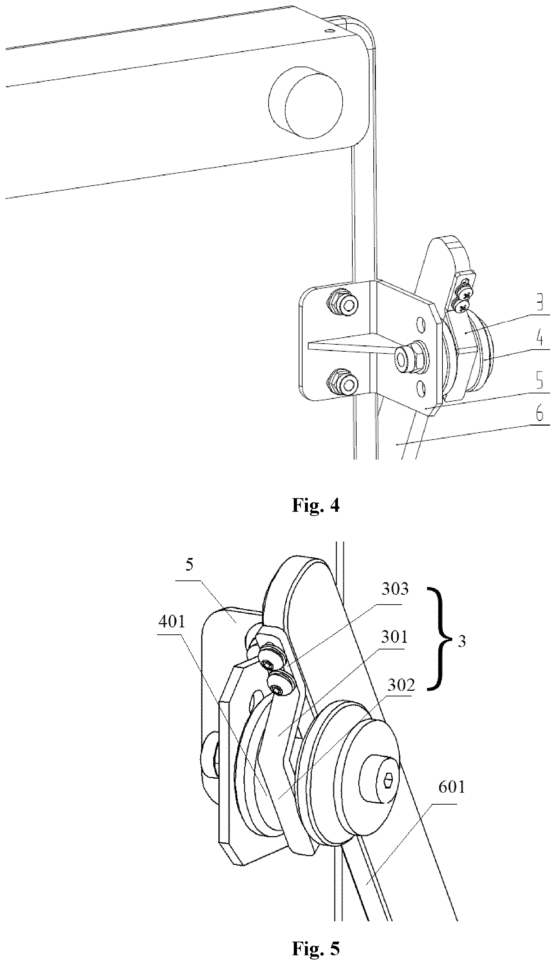

According to an embodiment of the present application, the guiding component 4 includes a roller and a mounting component 5. The roller is provided with a guiding groove 401; the mounting component 5 is configured for mounting the roller to the cover plate 8; the swing lever 6 includes a guiding surface 601 matched with the guiding groove 401. In this case, the guiding groove 401 of the roller and the guiding surface 601 of the swing lever 6 are in rolling matching, thereby reducing the friction between the two and reducing the resistance when the cover plate 8 is opened and closed. The roller of the guiding component 4 can also be replaced with a fixed wheel. Since the fixed wheel cannot rotate, the swing lever 6 can only slide relative to the fixed wheel. Alternatively, the guiding component 4 can also be replaced with other structural forms having the guiding groove 401. It is even feasible to use a round lever as the guiding component 4. As the swing lever 6 swings, the swing lever 6 moves relative to the round lever until the round rod moves to the position where it forms a limiting matching with the first limiting component 3 of the swing lever 6. When the guiding component 4 is provided with a guiding groove 401, the guiding groove 401 includes a circular arc surface. No matter what angle the swing lever 6 is rotated to, the circular arc surface keeps in contact with the guiding surface 601 of the swing lever 6 to ensure that the guiding component 4 can eventually move to the position matched with the first limiting component 3. In Fig. 5, the guiding groove 401 is an annular groove formed between two oppositely arranged wheel discs of the roller. In addition, the specific form of the mounting component 5 is not limited, for example, the mounting component 5 may be in the form of a bracket, or any structural form disclosed in the prior art, as long as the guiding component 4 (such as the roller) can be mounted to the cover plate 8.

According to an embodiment of the present application, the roller is mounted to an edge of the cover plate 8, and in a width direction of the cover plate 8, the roller protrudes relative to an end surface of the cover plate 8. In Fig. 1, Fig. 2 and Fig. 7, the width direction of the cover plate 8 corresponds to a width direction of the climbing ladder. Since the roller protrudes relative to the end face of the cover plate 8, the cover plate 8 will not interfere the matching between the swing lever 6 and the guiding component 4, which facilitates the installation of the driving component.

According to an embodiment of the present application, the driving component further includes a motor 1 and a controller 2. The output shaft of the motor 1 is dynamically coupled to the swing lever 6, and the motor 1 can be, but is not limited to, a servo motor 1 or a stepping motor 1. In addition to the form of the motor 1, the driving component may also be in the form of an air cylinder or a hydraulic cylinder. The controller 2 controls the start and stop of the motor 1 based on the position of the cover plate 8. That is, the cover plate assembly is correspondingly provided with a sensor, which is configured for detecting the position of the cover plate 8 and sending the position of the cover plate 8 to the controller 2. The controller 2 controls the motor 1 to stop working if the cover plate 8 has reached a preset position, or, the controller 2 controls the motor 1 to continue working if the cover plate 8 has not reached the preset position. The type of the sensor is not limited, for example, the sensor may be an infrared proximity switch, a magnetic-control switch of reed tube, or the like. Moreover, the number of the controllers can be multiple, and the controllers are respectively set corresponding to the first position and the second position.

According to an embodiment of the present application, the controller 2 is provided in a control box, and the control box is fixed to a top of the motor 1 by a screw.

According to an embodiment of the present application, assuming that the motor 1 is powered off during the rotation of the cover plate 8, since only a guiding matching is formed between the swing lever 6 and the guiding component 4 (such as the roller), and the guiding component 4 has not moved to the first limiting component 3 and formed a limiting matching with it, the swing lever 6 and the cover plate 8 can be separated from each other at this time. Therefore, operators can manually open the cover plate 8 to perform inspection and maintenance of equipment in the wind turbine.

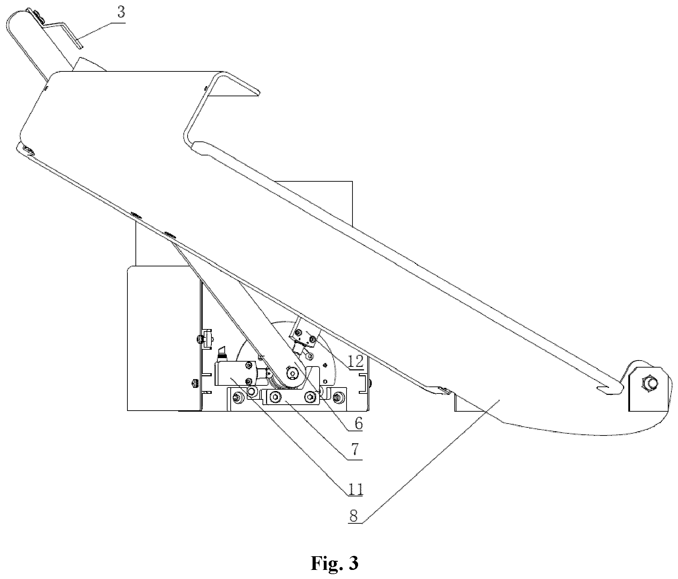

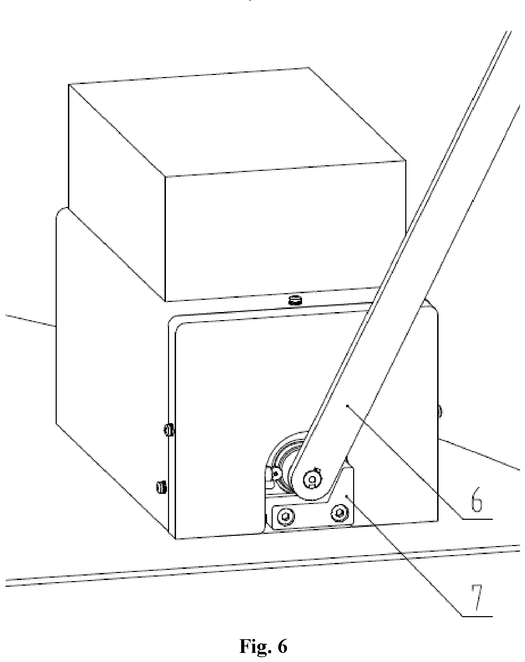

According to an embodiment of the present application, the motor 1 is provided with a second limiting component 7; when at the first position, a limiting matching is formed between the second limiting component 7 and the swing lever 6 to prevent the swing lever 6 from rotating far away from the second position. That is, the swing lever 6 can be mechanically limited by the second limiting component 7. Furthermore, when the cover plate 8 rotates to the first position, while the controller 2 controls the motor 1 to stop working, and the second limiting component 7 also mechanically limits the swing lever 6, thereby realizing a double limitation of the swing lever 6, which can effectively avoid the accident caused by the limiting failure and improve the overall reliability of the equipment. In Fig. 3 and Fig. 6, the second limiting component 7 is a limiting block. When the cover plate 8 rotates to the first position, the swing lever 6 abuts the limiting block to prevent the swing lever 6 and the cover plate 8 from further rotating. As long as the second limiting component 7 can mechanically limit the swing lever 6, the specific structural form is not limited, for example, it can also adopt structural forms such as a limiting lever, a limiting plate, or a limiting rib.

It should be noted that when the cover plate 8 rotates to the second position, since the second position is also provided with a corresponding sensor, the controller 2 will also control the motor 1 to stop working based on a signal of the sensor. Furthermore, the sensor corresponding to the second position and the mechanical limiting between the first limiting component 3 and the guiding component 4 can also realize double limiting on the swing lever 6, to effectively avoid the accident caused by the limiting failure, and improve the overall reliability of the equipment.

According to an embodiment of the present application, when at the first position, the cover plate 8 can be mechanically limited by the second limiting component 7, and when at the second position, the mechanical limiting can be formed by the matching between the first limiting component 3 and the guiding component 4. Even if the sensor fails to detect the position of the cover plate 8, or the controller 2 fails to control after the controller 2 obtains the position of the cover plate 8, the swing lever 6 can be mechanically limited by the second limiting component 7 and the first limiting component 3, to prevent the cover plate 8 from hitting the wall of the wind power tower drum or the tower drum platform 9, and avoid damage to the cover plate 8 and related components of the wind turbine.

In a second aspect, a wind power tower drum according to an embodiment of the present application is provided, which includes at least one tower drum platform 9. The tower drum platform 9 is provided with a platform entrance, the tower drum platform 9 is provided with the above-mentioned cover plate assembly, and the cover plate 8 is able to open and close the platform entrance. That is, the first position of the cover plate 8 in the cover plate assembly corresponds to the position where the cover plate 8 closes the platform entrance, namely, a closed state of the cover plate 8; the second position of the cover plate 8 in the cover plate assembly corresponds to the position where the cover plate 8 opens the platform entrance, namely, an open state of the cover plate 8.

Referring to Fig. 1, the cover plate 8 is at the first position, and the roller is located above the swing lever 6 at this time, and an upper part of the swing lever 6 can be embedded in the guiding groove 401 of the roller. As the swing lever 6 swings, an upper surface of the swing lever 6 keeps in contact with the guiding groove 401, to drive the cover plate 8 to rotate to the open state. The cover plate 8 rotates from the closed state to the open state, and the rotation angle of the cover plate 8 exceeds 90°. For example, the rotation angel between the cover plate 8 and the tower drum platform 9 is 120° when the cover plate 8 is in the open state. When the cover plate 8 needs to be closed, the Z-shaped first limiting component 3 matches with the roller, and then the rotation of the swing lever 6 can drive the cover plate 8 to rotate. When the first limiting component 3 is separated from the roller, the angle between the cover plate 8 and the tower drum platform 9 is less than or equal to 90°, and then the cover plate 8 moves to the closed state under the action of gravity.

According to an embodiment of the present application, a climbing ladder is provided in the wind power tower drum, the climbing ladder passes through the platform entrance, and the climbing ladder is provided with a sensing device 10 for sensing the body of a climb-free apparatus, the sensing device 10 is communicatively connected to a controller 2 of the wind power tower drum, and the controller 2 is configured to control the rotation of the cover plate 8 based on a sensing signal of the sensing device 10. That is, when the body of the climb-free apparatus reaches the platform entrance, the controller 2 controls the cover plate 8 to rotate automatically, to facilitate the body of the climb-free apparatus to go up and down the tower drum platform 9. The type of the sensing device 10 is not limited, for example, the sensing device 10 may adopt a door magnetic component, or, the sensing device 10 may also adopt an infrared switch or the like. When the sensing device 10 is a door magnetic assembly, the door magnetic assembly can, but is not limited to, be detachably fixed to the climbing ladder through a screw.

In a third aspect, a wind turbine is provided according to an embodiment of the present application, which includes a wind power tower drum according to the embodiments of the second aspect, and further includes a wind wheel and a generator. Both the wind wheel and the generator are mounted to the wind power tower drum.

According to the wind turbine of the embodiment of the present application, since the platform entrance of the tower drum platform 9 of the wind power tower drum can be automatically opened and closed, the labor intensity of the operator can be reduced, the user experience can be improved, and the safety of the user can be ensured.

A specific embodiment of the present application will be described below.

Referring to Fig. 1 to Fig. 7, in the wind power tower drum according to the embodiment of the present application, a side corresponding to the cover plate 8 is provided with a swing lever 6, and the wind power tower drum is provided with an upper limiting mechanism and a lower limiting mechanism of the swing lever 6. The upper limiting mechanism includes an upper electrical limiting component 12 and an upper mechanical limiting component; the lower limiting mechanism includes a lower electrical limiting component 11 and a lower mechanical limiting component. The upper electrical limiting component 12 and the lower electrical limiting component 11 are the sensors mentioned above. The swing lever 6 is connected to the output shaft of the motor 1, and the motor 1 drives the swing lever 6 to rotate when it operates. A free end of the swing lever 6 is provided with a Z-shaped metal module, and the Z-shaped metal module is used as the upper mechanical limiting component. When the swing lever 6 rotates to the second position, the upper electrical limiting component 12 and the upper mechanical limiting component are simultaneously triggered. An L-shaped metal block is mounted to the output shaft of the motor 1, and the L-shaped metal block is used as a lower mechanical limiting component. When the swing lever 6 rotates to the first position, the lower electrical limiting component 11 and the lower mechanical limiting component are simultaneously triggered. Both the upper electrical limiting component 12 and the lower electrical limiting component 11 are fixed on a bracket of the motor 1.

When the swing lever 6 swings upwardly, the cover plate 8 rotates to the second position accordingly. When the swing lever 6 reaches the position of upper electrical limiting component 12, the motor 1 stops rotating, and the Z-shaped metal module and the roller form a limiting matching, which will also make the cover plate 8 unable to continue rotating. When the swing lever 6 rotates downwardly, the cover plate 8 rotates to the first position accordingly. When the swing lever 6 reaches the position of the lower electrical limiting component 11, the motor 1 stops rotating, and the swing lever 6 withstands the L-shaped metal. At this time, the cover plate 8 is flush with the tower drum platform 9 and the cover plate 8 is unable to continue rotating.

The above embodiments are only used to illustrate the present application, but not to limit it. Although the present application has been described in detail with reference to the embodiments, those of ordinary skill in the art should understand that various combinations, modifications or equivalent replacements made to the solutions of the present application do not depart from the scope of the solutions of the present application, and should be covered by the scope of the claims of the present application.

## Claims

1. A cover plate assembly, comprising:
a driving component, including a swing lever (6) provided with a first limiting component (3); and
a cover plate (8) configured for rotating between a first position and a second position as rotation of the swing lever (6), wherein the cover plate (8) is provided with a guiding component (4), and the guiding component (4) moves along the swing lever (6) during a swing process of the swing lever (6); when at the second position, the guiding component (4) and the first limiting component (3) form a limiting matching to prevent the swing lever (6) from driving the cover plate (8) to move far away from the first position.

2. The cover plate assembly according to claim 1, wherein the limiting matching formed between the guiding component (4) and the first limiting component (3) is constructed as: when at the second position, the swing lever (6) is configured for driving the cover plate (8) to move toward the first position.

3. The cover plate assembly according to claim 2, wherein the first limiting component (3) comprises:
a first stop, fixed to the swing lever (6), and located in a moving direction of the guiding component (4); and
a second stop, connected to the first stop, and provided opposite to the swing lever (6), wherein a limiting groove is formed between the first stop, the second stop and the swing lever (6),
wherein when at the second position, the guiding component (4) abuts the first stop or the second stop, and the guiding component (4) is located in the limiting groove.

4. The cover plate assembly according to claim 3, wherein the first stop is a first limiting plate, the second stop is a second limiting plate, wherein the first limiting component (3) comprises a mounting plate, the first limiting plate and the second limiting plate which are connected in sequence, and the mounting plate and the second limiting plate are respectively located on both sides of the first limiting plate.

5. The cover plate assembly according to claim 3, wherein when at the first position, an included angle between the cover plate (8) and a horizontal plane is less than 90°, when at the second position, an included angle between the cover plate (8) and the horizontal plane is greater than 90°, and the guiding component (4) is located in the limiting groove when the included angle between the cover plate (8) and the horizontal plane is greater than 90°.

6. The cover plate assembly according to any one of claims 1 to 5, wherein the guiding component (4) comprises:
a roller, provided with a guiding groove; and
a mounting component (5), configured for mounting the roller to the cover plate (8),
wherein the swing lever (6) comprises a guiding surface matched with the guiding groove.

7. The cover plate assembly according to claim 6, wherein the roller is mounted to an edge of the cover plate (8), and in a width direction of the cover plate (8), the roller protrudes relative to an end surface of the cover plate (8).

8. The cover plate assembly according to any one of claims 1 to 5, wherein the driving component further comprises:
a motor (1), wherein an output shaft of the motor (1) is dynamically coupled to the swing lever (6); and
a controller (2), configured to control start and stop of the motor (1) based on the position of the cover plate (8).

9. The cover plate assembly according to claim 8, wherein the motor (1) is provided with a second limiting component (7); when at the first position, a limiting matching is formed between the second limiting component (7) and the swing lever (6) to prevent the swing lever (6) from rotating far away from the second position.

10. A wind power tower drum, comprising at least one tower drum platform (9) provided with a platform entrance, wherein the tower drum platform (9) is provided with the cover plate assembly according to any one of claims 1 to 9, and the cover plate (8) is capable of opening and closing the platform entrance.

11. The wind power tower according to claim 10, wherein a climbing ladder is provided in the wind power tower drum, the climbing ladder passes through the platform entrance and is provided with a sensing device (10) for sensing a body of a climb-free apparatus, the sensing device (10) is communicatively connected to a controller (2) of the wind power tower drum, and the controller (2) is configured to control the rotation of the cover plate (8) based on a sensing signal of the sensing device (10).

12. A wind turbine, comprising:
a wind power tower drum according to claim 10 or 11;
a wind wheel, mounted to the wind power tower drum; and
a generator, mounted to the wind power tower drum.

13. A wind power tower drum, comprising: a motor (1), a controller (2), a first limiting component (3), a guiding component (4), a swing lever (6), a second limiting component (7) and a cover plate (8), wherein the controller (2) is provided in a control box, the control box is fixed to a top of the motor (1), and the controller (2) is configured to control automatic opening and closing of the cover plate (8) based on a sensor; the motor (1) is fixed on a tower drum platform (9) of the wind power tower drum, and the motor (1) is configured for driving the swing lever (6) to swing; the swing lever (6) is mounted to the motor (1), and configured for driving the cover plate (8) to rotate between a first position and a second position to open and close automatically;
when at the second position, the guiding component (4) and the first limiting component (3) form a limiting matching, and the limiting matching formed between the guiding component (4) and the first limiting component (3) is constructed as: the swing lever (6) is prevented from driving the cover plate (8) to move far away from the first position, and the swing lever (6) is configured for driving the cover plate (8) to move toward the first position;
when at the first position, a limiting matching is formed between the second limiting component (7) and the swing lever (6) to prevent the swing lever (6) from rotating far away from the second position.

14. The wind power tower drum according to claim 13, wherein the control box is fixed to the top of the motor (1) by a screw, the motor (1) is fixed on the tower drum platform (9) of the wind power tower drum by a screw, and the swing lever (6) is mounted to the motor (1) by a screw;
the guiding component (4) comprises a roller and a mounting component (5), the roller is provided with a guiding groove, the swing lever (6) comprises a guiding surface matched with the guiding groove, and the mounting component (5) is configured for mounting the roller to the cover plate (8);
the first limiting component (3) comprises a mounting plate, a first limiting plate and a second limiting plate which are connected in sequence, and the mounting plate and the second limiting plate are respectively located on both sides of the first limiting plate, the mounting plate is fixed to the swing lever (6) by a screw, the first limiting plate is located in a moving direction of the roller, and the second limiting plate is provided opposite to the swing lever (6), a limiting groove is formed between the first limiting plate, the second limiting plate and the swing lever (6);
when at the second position, the roller abuts the first limiting plate or the second limiting plate, and the roller is located in the limiting groove;
the second limiting component (7) is a limiting block, and the limiting block is provided on the motor (1); the wind power tower drum further comprises an sensing device (10), the sensing device (10) is fixed on a climbing ladder of the wind power tower drum by a screw, and the sensing device (10) is configured to sense a position of a body of a climb-free apparatus and send the position to the controller (2).
